# EUROPÄISCHE PATENTSCHRIFT

(11) **EP 0 624 409 B1**
(45) Veröffentlichungstag und Bekanntmachung des Hinweises auf die Patenterteilung: **26.11.1997**
(21) Anmeldenummer: 94250028.1
(22) Anmeldetag: 11.02.1994
(51) Int. Cl.: B09B 3/00, B03B 4/00, H01J 9/00

(54) **Verfahren zum Herauslösen eines in einen Festkörper eingedrungenen Stoffes und zum Ablösen von an einem Festkörper äusserlich anhaftenden Stoffen**
Method of extracting a substance having penetrated a solid and of separating substances adhesing externally to a solid
Procédé pour extraire une substance ayant pénétré dans un solide et pour séparer des substances adhérant extérieurement à un solide

(30) Priorität: 18.02.1993 DE 4305506
(43) Veröffentlichungstag der Anmeldung: 17.11.1994
(73) Patentinhaber: LVG LAMPENVERWERTUNGSGESELLSCHAFT mbH, D-69469 Weinheim (DE)
(72) Erfinder: Bernecker, Gerhard, Dipl.-Ing., D-69469 Weinheim (DE)
(74) Vertreter: Maikowski, Michael, Dipl.-Ing. Dr.

(56) Entgegenhaltungen:
- EP-A- 0 287 540
- WO-A-87/07536
- WO-A-93/01888
- DE-A- 3 610 355
- NL-A- 9 100 119
- PATENT ABSTRACTS OF JAPAN vol. 11, no. 60 (C-405) 24. Februar 1987 & JP-A-61 219 736 (NAKAMURA AKIRA) 30. September 1986
- UMWELT & TECHNIK, Nr.7-8, 1992 Seiten 22 - 24 C. HÖSSL 'Aufbereitung quecksilberhaltiger Gläser -etliche offene Fragen'

## Beschreibung

Die Erfindung betrifft ein Verfahren zum Herauslösen eines in einen Festkörper eingedrungenen Stoffes und zum Ablösen von an einem Festkörper äußerlich anhaftenden Stoffen und die Verwendung dieses Verfahren.

Leuchtstofflampen und Quecksilberdampflampen gehören zu der Gattung der Entladungslampen. Sie enthalten im Gegensatz zu herkömmlichen Glühlampen Quecksilber. Während der Lebensdauer einer Entladungslampe dringt Quecksilber in die Oberfläche der Leuchtstoffteilchen ein, so daß an der Oberfläche der Leuchtstoffteilchen eine die UV-Strahlung absorbierende Quecksilberschicht entsteht. Man spricht von einem "Vergrauen" des Leuchtstoffes. Wenn dieser Leuchtstoff bei der Entsorgung einer Entladungslampe am Glas der Lampe verbleibt, so ergibt sich daraus eine Quecksilberbelastung des Glases von 50 bis 80 mg Quecksilber pro kg Glas.

Weiter dringt während der Lebensdauer einer Entladungslampe in bestimmtem Umfange Quecksilber in das Glas ein. Die Konzentration des Quecksilbers in der Glaswandung ist abhängig von der Brenndauer der Lampe und den an der Glaswandung herrschenden Temperaturen. Dabei brennt am meisten Quecksilber dort in die Glasmatrix ein, wo beim Lampenbetrieb die höchsten Temperaturen vorliegen. Die höchsten Temparaturen liegen an den Lampenenden vor.

Beim Recycling von Leuchtstofflampen und Quecksilberdampflampen ist es aufgrund der toxischen Eigenschaften des Quecksilbers von großer Bedeutung, das Quecksilber von dem restlichen, dem Stoffkreislauf zurückzuführenden Lampenmaterial zu trennen. Zum Recycling von Entladungslampen sind mehrere Verfahren bekannt, mittels derer der Leuchtstoff und die Lampenenden von dem übrigen Glasmaterial getrennt und weiter behandelt werden (vgl. etwa Hößl, Bauer, Reuter: Etliche offene Fragen; Umwelt & Technik 7 - 8/92, S. 22 - 27).

Desweiteren ist aus der DE 36 10 355 A 1 ein Verfahren und eine Vorrichtung zur Abfallaufbereitung von Leuchtstoffröhren bekannt. Bei diesem Verfahren werden die Leuchtstoffröhren zu Glasbruchmaterial zertrümmert. Anschließend wird das am Glasbruchmaterial anhaftende Beschichtungsmaterial mit einem Luftstrom abgelöst. Das abgelöste Beschichtungmaterial wird in einem nachgeschalteten Staubfilter aus der Luft abgeschieden. Während des Ablösens der Beschichtungsmaterialen wird das Glasbruchmaterial gelockert und in Bewegung gehalten. Die Bewegung kann auf einer zu Schwingbewegungen angeregten Förderfläche erfolgen.

Die bekannten Verfahren ermöglichen jedoch nicht, das während der Brennzeit in die Glasmatrix der Lampen eingebundene Quecksilber herauszulösen. Je nach Lampenbrenndauer, Lampenkonstruktion und Ort der Probennahme an der Lampe handelt es sich dabei um Quecksilbergehalte zwischen 1 bis 100 mg Quecksilber pro kg Glas. Mittlere Werte des in die Glasmatrix eingedrungenen Quecksilbers liegen bei ca. 3 bis 10 mg Quecksilber pro kg Glas.

Das in die Glasmatrix eingedrungene Quecksilber wird zur Zeit erst in der Glashütte beim Einschmelzen des Glases frei und über einen Kamin in die Atmosphäre abgegeben, sofern die Glashütte nicht über eine aufwendige Abluftreinigungsanlage für Quecksilber verfügt. Solche Reinigungsanlagen fehlen in der Regel in den Glashütten. Daraus ergibt sich angesichts des Mittelwertes des in die Glasmatrix eingedrungenen Quecksilbers von ca. 3 bis 10 mg Quecksilber pro kg Glas eine nicht zu vernachlässigende Umweltbelastung.

Das Problem, das in die Glasmatrix eingedrungene Quecksilber aus dem Glasmaterial herauszulösen, ohne das Glas hohen Temperaturen auszusetzen bzw. zum Schmelzen zu bringen, ist bisher nicht gelöst worden. Jedoch darf dieser Immissionspfad für Quecksilber angesicht der damit verbundenen Umweltbelastung nicht vernachlässigt werden.

Der Erfindung liegt die Aufgabe zu Grunde, ein Verfahren zum Herauslösen eines in einen Festkörper eingedrungenen Stoffes sowie zum Ablösen von an dem Festkörper äußerlich anhaftenden Stoffen zur Verfügung zu stellen.

Diese Aufgabe wird erfindungsgemäß durch die kennzeichnenden Merkmale des Anspruchs 1 gelöst.

Erfindungsgemäß wird der Festkörper zunächst zerkleinert. Anschließend werden die erhaltenen Festkörperpartikel gerüttelt, wobei die beim Rüttelvorgang auf die Festkörperpartikel wirkende Beschleunigung mindestens 2 g beträgt.

Der Erfindung liegt folgende Einsicht zu Grunde. Während des Rüttelvorgangs stoßen die einzelnen Festkörperpartikel aneinander und erwärmen sich dabei durch innere Reibung. Naturgemäß erwärmt sich dabei insbesondere die Außenschicht eines Festkörperpartikels. In dieser Außenschicht befindet sich auch der in den Festkörper eingedrungene Stoff. Die Erwärmung der Außenschicht der Festkörperpartikel in Verbindung mit dem Rüttelvorgang bewirkt ein Herauslösen des eingedrungenen Stoffes aus dem Festkörper.

Das erfindungsgemäße Verfahren bewirkt nicht nur ein Herauslösen eines in einen Festkörper eingedrungenen Stoffes. So werden mit dem erfindungsgemäßen Verfahren Festkörperpartikel auch von gegebenenfalls äußerlich anhaftenden Verunreinigungen gereinigt. Diese Verunreinigungen können zum Beispiel mit Quecksilber belasteter Leuchtstoff von Entladungslampen sein.

Bei dem erfindungsgemäßen Verfahren werden die Festkörperpartikel während des Rüttelvorgangs geichzeitig von einem Gas umströmt. Im Bereich der Festkörperpartikel zirkuliert die Luft und es bildet sich eine Wirbelschicht. Dadurch wird erreicht, daß die innere Reibung der Festkörperpartikel weiter zunimmt. Aus dem Festkörper herausgelöste Stoffpartikel werden durch das strömende Gas in einfacher Weise ausgetragen und können in einem nachgeschalteten Filter aus dem Gas wieder rückgewonnen werden.

Das erfindungsgemäße Verfahren ist ein trockenes Verfahren, das ohne hohe Temperaturen auskommen. Daher ergibt sich bei dem erfindungsgemäßen Verfahren keine Problemverlagerung zu einem Abwasserproblem oder einem hohen Energieaufwand.

Das strömende Gas übt auf die Festkörperpartikel eine Druckkraft aus, die bevorzugt im wesentlichen den gleichen Betrag wie die auf die Festkörperpartikel wirkende Schwerkraft besitzt und nur um den Druckverlust der durchströmten Schüttung höher ist. Auf diese Weise werden eine vollständige Durchwirbelung der Festkörperpartikel und ein intensiver Wärmeaustausch zwischen dem Gas und den Festkörperpartikeln gewährleistet.

Das Gas weist mit Vorteil eine Temperatur zwischen 0 °C und 100 °C insbesondere von 40 °C bis 60 °C auf. Mit zunehmender Temperatur bewirkt das die Festkörperpartikel umströmende Gas zusätzlich zu der Verwirbelung und Auflockerung der Festkörperpartikel einen Wärmeübergang auf die Festkörperpartikel. Dadurch nimmt die Temperatur der Partikel, insbesondere deren Außenschicht weiter zu, so daß in die Festkörperpartikel eindiffundierte Stoffe in Verbindung mit dem steten Rüttelvorgang hervorragend herausgelöst werden.

Der beim erfindungsgemäßen Verfahren aus den Festkörperpartikeln herausgelöste Stoff wird bevorzugt aus dem an den Festkörperpartikel vorbeiströmenden Gas in einem nachgeschalteten Verfahrensschritt zurückgewonnen. Dies erfolgt etwa mittels geeigneter Filter.

Als Gas wird bevorzugt Luft verwendet.

Die Festkörperpartikel erfahren beim Rüttelvorgang eine Beschleunigung von 2 g bis 10 g. Bei Glas als Festkorper und in die Glasmatrix eindiffundiertem Quecksilber erfahren die Glasscherben beim Rüttelvorgang bevorzugt eine Beschleunigung von 3 bis 4 g.

Zur Realisierung dieser Beschleunigungswerte werden die Festkörperpartikel bevorzugt mit einer Frequenz von 750 bis 3000 Schwingungen pro Minute, vorzugsweise einer Frequenz von 1100 bis 1750 Schwingungen pro Minute gerüttelt. Die Schwingungsamplitude der Festkörperpartikel beträgt beim Rüttelvorgang mit Vorteil im Mittel 1 bis 10 mm, vorzugsweise 2 bis 5 mm.

Die Oberfläche der Festkörperpartikel beträgt bevorzugt im Mittel 0,1 cm² bis 10 cm², insbesondere 1 cm² bis 2 cm². Der angegebene Mittelwert entspricht dabei dem Maximum einer Gaußverteilung.

In einer bevorzugten Ausführung des erfindungsgemäßen Verfahrens werden die Festkörperpartikel in eine Vorrichtung mit einem Schwingfließbett eingegeben. Dabei werden die Partikel auf einem gelochten Anströmboden von Luft umströmt. Mittels eines Unwuchtantriebes führt der Anströmboden eine Schwingbewegung aus.

Dabei schwingt das Schwingfließbett mit Vorteil mit einer Frequenz von 750 bis 3000 Schwingungen pro Minute, vorzugsweise einer Frequenz von 1100 bis 1750 Schwingungen pro Minute. Die Schwingungsamplitude des Schwingfließbettes beträgt 1 bis 6 mm, vorzugsweise 2 bis 5 mm. Die Verweilzeit der Festkörperpartikel im Schwingfließbett beträgt 1 bis 50 Minuten, vorzugsweise 3 bis 15 Minuten und die spezifische Luftbeaufschlagung des Schwingfließbettes 1000 bis 3000 Kubikmeter pro Quadratmeter und Stunde, vorzugsweise 1500 bis 2000 Kubikmeter pro Quadratmeter und Stunde.

Die das Schwingfießbett umströmende Luft wird in einer bevorzugten Ausführungsform im Umluftbetrieb geführt. Dies hat den Vorteil, daß kontaminierte Abluft nicht an die Atmosphäre abgegeben wird. Auch ist es nicht erforderlich, kühle Außenluft fortlaufend zu erwärmen.

Das erfindungsgemäße Verfahren wird zum Herauslösen von Quecksilber aus Glas verwendet, wobei das Quecksilber beispielsweise während der Brenndauer einer Entladungslampe in die Glasmatrix eingedrungen ist. Diese Verwendung löst die eingangs beschriebenen Probleme beim Recyceln von Entladungslampen.

Weiter wird das erfindungsgemäße Verfahrens zum Ablösen von an Glas äußerlich anhaftenden Leuchtstoffes verwendet, der Quecksilber enthält.

Eine erfindungsgemäße Anordnung zum Herauslösen eines in einen Festkörper eingedrungenen Stoffes und zum Ablösen von an einem Festkörper äußerlich anhaftenden Stoffen weist ein Schwingfließbett mit mindestens einer Zuluftöffnung und mindestens einer Abluftöffnung sowie ein Umluftgebläse, einen Fliehkraftabschneider, einen Feinstaubfilter, mindestens einen Wärmetauscher und einen Aktivkohlefilter auf. Dabei wird die das Schwingfließbett durch die mindestens eine Zuluft- und Abluftöffnung durchströmende Luft mittels entsprechender Leitvorrichtungen in einem aus diesen Elementen gebildeten Kreislauf geführt.

Zur Reinigung der Umluft von aus den Festkörperpartikeln herausgelöstem Quecksilber weist der Aktivkohlefilter zwei verschiedene Schichten auf, wobei die zuerst durchströmte Schicht aus nicht imprägnierter Aktivkohle und die anschließend durchströmte Schicht aus imprägnierter Aktivkohle besteht. An der Schicht aus imprägnierter Aktivkohle wird dampfförmiges Quecksilber zu einer nichtflüchtigen Quecksilberverbindung umgewandelt. Die Imprägnierung der Aktivkohle erfolgt insbesondere durch Schwefel oder Fluor.

Die Erfindung soll nachfolgend unter Bezugnahme auf die einzige Figur der Zeichnung an einem Ausführungsbeispiel näher erläutert werden.

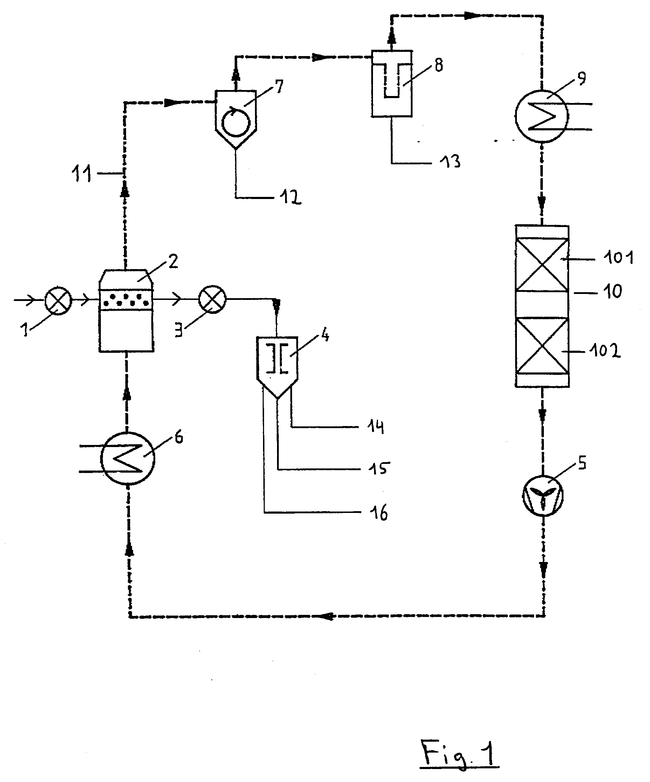

Figur 1 zeigt ein Fließbild einer Anlage zum Recyceln von Entladungslampen.

Es werden stabförmige Entladungslampen recycelt. Dazu werden zunächst im sogenannten Kappentrennverfahren die Lampenenden vom Glaszylinder entfernt. Die Lampenenden enthalten eine andere Glassorte als der Glaszylinder, der aus einem, eine hohe Transparenz aufweisendem Natron-Kalk-Glas besteht. Die Lampenenden bestehen dagegen aus Bleiglas. Dieses sollte nicht mit dem Natron-Kalk-Glas gemischt werden, da das Mischprodukt nicht geeignet ist, zur Fertigung von neuen Glaszylindern für Entladungslampen recycelt zu werden.

Aus dem Glaszylinder werden der Leuchtstoff zusammen mit dem Leuchtstoff anhaftendem Quecksilber sowie das dampfförmige Quecksilber mit Preßluft ausgeblasen. Der Leuchtstoff wird in bekannter Weise weiterbehandelt oder als Sonderabfall abgelagert.

Das von Leuchtstoff im wesentlichen gereinigte Zylinderglas wird in Scherben zerbrochen, zerkleinert und anschließend über eine Zellenradschleuse 1 einem Schwingfließbett 2 zugeführt. Die Partikeloberfläche des gemahlenen Glasmaterials beträgt in etwa 1 bis 2 cm².

Das Schwingfließbett 2 weist eine gelochte Materialrinne, eine oder mehrere Zuluftöffnungen, eine oder mehrere Abluftöffnungen und zwei Unwuchtmotoren auf, welche symmetrisch eingebaut sind und synchron mit gleicher Geschwindigkeit drehen. Die Amplitude der Schwingung der Umwuchtmotoren ist relativ hoch und beträgt 4,5 mm. Das Schwingfließbett 2 schwingt mit einer Frequenz von 1440 Schwingungen pro Minute. Die spezifische Luftbeaufschlagung des Schwingfließbettes 2 beträgt 1830 Kubikmeter pro Quadratmeter und Stunde. Die Festkörperpartikel verweilen etwa 5 Minuten im Schwingfließbett 2.

Durch die Zuluftöffnung wird warme Zuluft eingepreßt und durch die gelochte Materialrinne geführt. Dabei lockert die strömende Luft das Glasmaterial in einem Wirbelbett auf. Dies ermöglicht einen intensiven Wärmeaustausch zwischen der Luft und den Glaspartikeln sowie einen guten Stoffübergang. Durch die Umströmung mit großen Luftmengen wird das freigesetzte Quecksilber ständig abgeführt und so ein Partialdruckgefälle zu den das Quecksilber abgebenden Glasscherben erzeugt.

Durch die Unwuchtmotoren erfährt die Materialrinne eine Schwingbewegung. Dadurch werden die Glaspartikel zusätzlich zu der Luftströmung auf der Materialrinne gerüttelt und transportiert. Die Glaspartikel erfahren dabei eine Beschleunigung von etwa 3,5 g. Durch die Rüttelung der Glaspartikel und die Umströmung der Partikel mit Luft wird während des Lampenbrennprozesses in die Glasmatrix eingedrungenes Quecksilber ausgetrieben. Das ausgetretene Quecksilber und andere Verunreinigungen werden mit der Abluft fortgeführt.

In einem bevorzugten Ausführungsbeispiel weist die das Schwingfließbett 2 durchströmende Luft eine Temperatur von 60 °C auf. Dadurch erfolgt ein Wärmeübergang von der Luft auf die Glaspartikel, wodurch in die Partikel diffundiertes Quecksilber besonders gut ausgetrieben wird. Die Glaspartikel erwärmen sich aufgrund der inneren Reibung der Glaspartikel bei den angegebenen Temperaturen auf etwa 72 °C.

Damit liegen die von außen eingebrachten Temperaturen auf einem so niedrigen Niveau vor, daß der bekannte Effekt, Quecksilber durch hohe Temperaturen zu verdampfen und so aus dem entsprechenden Stoff auszutreiben, für den beschriebenen Reinigungseffekt in keiner Weise maßgebend ist.

Im Schwingfließbett 2 erfolgt nicht nur eine Reinigung der Glaspartikel von in die Partikel eingedrungenem Quecksilber. Auch werden im Schwingfließbett 2 durch den Rüttelvorgang und die Umströmung mit Gas an den Partikeln äußerlich anhaftende Verunreinigungen entfernt, insbesondere Leuchtstoff, der wiederum Quecksilber enthält.

Die das Schwingfließbett durchströmende Luft wird in einem geschlossenen Kreislauf 11 im Umluftbetrieb geführt. Alternativ ist vorgesehen, dem Schwingfließbett Außenluft zuzuführen und die gereinigte Abluft an die Atmosphäre abzuführen. Ein Umluftbetrieb ist jedoch kostengünstiger, da nicht Außenluft erwärmt zu werden braucht. Auch wird durch einen Umluftbetrieb vermieden, daß Abluft an die Atmosphäre abgegeben wird. Gegebenenfalls ist ein Betrieb mit ständiger partieller Auswechslung des Luftinventars vorgesehen.

Die Umluft wird von einem Gebläse 5 in dem geschlossenen Kreislauf 11 umgewälzt. Sie wird in einem Wärmetauscher 6 im indirekten Wärmeaustausch mit Warmwasser oder Dampf auf 60 °C erwärmt und anschließend mit einer Pressung von 150 hPa von unten in das Schwingfließbett 2 gedrückt. Wie bereits beschrieben, durchströmt die Umluft die gelochte Materialrinne des Schwingfließbettes 2, wirbelt die darauf befindlichen Festkörperpartikel auf und nimmt die staub- und gasförmigen Bestandteile, insbesondere herausgelöstes Quecksilber und Leuchtstoff mit.

In einem Fliehkraftabschneider 7 wird die Hauptfraktion 12 von Staub und insbesondere Leuchtstoff abgeschieden. In einem nachgeschalteten Feinstaubfilter 8 wird der Reststaub 13 abgeschieden. Der Restgehalt von Staub in der Umluft beträgt danach weniger als 0,1 mg/m³. Damit ist die Umluft soweit von Staub gereinigt, daß gesichert ist, daß im nachgeschalteten Aktivkohlefilter 10 nicht die aktive Oberfläche der Aktivkohle verlegt wird. Vor dem Aktivkohlefilter 10 ist ein Wärmetauscher 9 angeordnet. In diesem wird der Umluft die Wärme abgeführt, die durch Reibung der Festkörperpartikel im Schwingfließbett 2 erzeugt wurde.

Im Aktivkohlefilter 10 wird das gasförmige Quecksilber aus der Umluft abgeschieden. Dazu sind zwei Schichten 101, 102 von Aktivkohle vorgesehen. Im oberen Bereich des Filters ist eine Schicht 101 nicht imprägnierter Aktivkohle vorgesehen. Diese Schicht 101 wird von der Umluft zuerst durchströmt. Darunter befindet sich eine Schicht 102 aus Aktivkohle, die mit Schwefel imprägniert wurde.

Das in der oberen Schicht 101 an die Aktivkohle adsorbierte Quecksilber kann nach Beladung der Schicht 101 bis zum Gleichgewichtszustand wieder zurückgewonnen werden, indem die beladene Aktivkohle aus dem Filter entfernt und durch bekannte Trockendestillation abgetrieben wird.

In der unteren Schicht 102 wird das Quecksilber, das die obere Schicht 101 bereits passiert hat, durch Chemosorption zu Quecksilbersulfid umgewandelt und gebunden. Dadurch wird ein Restquecksilbergehalt der Umluft von weniger als 10 µg Quecksilber pro Kubikmeter Luft erreicht. Ein derart geringer Rest-Quecksilber-Gehalt könnte mit nicht imprägnierter Aktivkohle nicht erreicht werden. Bei alleiniger Verwendung von imprägnierter Aktivkohle könnte die Hauptmenge des Quecksilbers dagegen nicht zurückgewonnen werden, da Quecksilbersulfid eine sehr stabile chemische Verbindung darstellt, die nicht von der Aktivkohle abdestillierbar ist.

Das endgereinigte Glas wird aus dem Schwingfließbett 2 über eine Zellenradschleuse 3 ausgetragen und kann wieder zur Lampenfertigung eingesetzt werden. Es weist einen Quecksilbergehalt von weniger als 0,05 mg Quecksilber pro kg Glas in der Glasmatrix auf. Bei einem ursprünglichen Mittelwert von etwa 3 bis 10 mg Quecksilber pro kg Glas entspricht das einer durchschnittlichen Senkung des Quecksilbergehaltes des Glases um mindestens 98,3 Prozent.

Die bei stabförmigen Lampen anfangs abgetrennten Lampenenden werden kleingeshreddert und ebenfalls nach dem oben beschriebenen Verfahren von Quecksilber gereinigt. Anschließend wird das Shreddergut einem Metallabschneider 4 zugeführt. In diesem sind hintereinander eine Magnet- und eine Induktionstrommel angeordnet. Dadurch können drei getrennte Fraktionen gebildet werden: Glas 14, magnetisierbare Metallteile 15 und nicht magnetisierbare Metallteile 16. Letztere sind insbesondere die von den Lampenenden stammenden Aluminiumkappen.

Auch Sonderbauformen, etwa U-, ring- oder birnenförmige Leuchtstofflampen sowie die Entladungsgefäße von Energiesparlampen werden in der beschriebenen Weise von in die Glasmatrix sowie in die anderen Lampenbestandteile eingedrungenem Quecksilber als auch anhaftenden Leuchtstoff gereinigt. Diese Lampenformen sind für das Kappentrennverfahren nicht geeignet. Diese Lampen werden ebenfalls geshreddert und einem Schwingfließbett 2 zugeführt. Als Mischprodukt fällt ein Mischglas an, das nicht für die Lampenfertigung geeignet ist, sondern nur auf geringerem Niveau, etwa für Isolierstoffe aus Glas, einsetzbar ist.

Nach Austragen aus dem Schwingfließbett 2 noch an der Oberfläche anhaftender Leuchtstoffstaub, der die Hauptmasse des Quecksilberinventars gebrauchter Sonderbauformen enthält, ist in seiner Menge derart vermindert, daß der daraus resultierende Quecksilbergehalt auch bei diesen Lampen, die nicht nach dem Kappentrennverfahren vorgereinigt wurden, unter 2 mg Quecksilber pro kg Glas liegt.

## Patentansprüche

1. Verfahren zum Herauslösen des in das Glas von Entladungslampen eingedrungenen Quecksilbers und zum Ablösen von am Glas und/oder an den Metallkappen äußerlich anhaftendem Quecksilber und/oder Leuchtstoffen,
**dadurch gekennzeichnet**,
daß das Glas und/oder die Metallkappen von Entladungslampen zunächst zerkleinert und die erhaltenen Festkörperpartikel anschließend gerüttelt werden, wobei die beim Rüttelvorgang auf die Festkörperpartikel wirkende Beschleunigung mindestens 2 g beträgt und gleichzeitig die Festkörperpartikel von einem Gas umströmt werden.

2. Verfahren nach Anspruch 1, **dadurch gekennzeichnet**, daß die vom Gas auf die Festkörperpartikel ausgeübte Druckkraft im wesentlichen den gleichen Betrag wie die auf die Festkörperpartikel wirkende Schwerkraft aufweist.

3. Verfahren nach mindestens einem der Ansprüche 1 oder 2 , **dadurch gekennzeichnet**, daß das die Festkörperpartikel umströmende Gas eine Temperatur zwischen 0°C und 100°C aufweist.

4. Verfahren nach mindestens einem der Ansprüch 1 bis 3, **dadurch gekennzeichnet**, daß das die Festkörperpartikel umströmende Gas eine Temperatur zwischen 40°C bis 60 °C aufweist.

5. Verfahren nach mindestens einem der Ansprüche 1 bis 4, **dadurch gekennzeichnet**, daß der herausgelöste Stoff aus dem an den Festkörperpartikel vorbeiströmenden Gas zurückgewonnen wird.

6. Verfahren nach mindestens einem der Ansprüche 1 bis 5, **dadurch gekennzeichnet**, daß als das die Festkörperpartikel umströmende Gas Luft verwendet wird.

7. Verfahren nach mindestens einem der vorangehenden Ansprüche, **dadurch gekennzeichnet**, daß die Festkörperpartikel beim Rüttelvorgang eine Beschleunigung von 2 g bis 10 g erfahren.

8. Verfahren nach mindesten einem der vorhergehenden Ansprüche, **dadurch gekennzeichnet**, daß die Festkörperpartikel beim Rüttelvorgang eine Beschleunigung von 3 g bis 4 g erfahren.

9. Verfahren nach mindestens einem der vorangehenden Ansprüche, **dadurch gekennzeichnet**, daß die Festkörperpartikel mit einer Frequenz von 750 bis 3000 Schwingungen pro Minute gerüttelt werden.

10. Verfahren nach mindestens einem der vorangehenden Ansprüche, **dadurch gekennzeichnet**, daß die Festkörperpartikel mit einer Frequenz von 1100 bis 1750 Schwingungen pro Minute gerüttelt werden.

11. Verfahren nach mindestens einem der vorangehenden Ansprüche, **dadurch gekennzeichnet**, daß die Schwingungsamplitude der Festkörperpartikel beim Rüttelvorgang im Mittel 1 bis 10 mm beträgt.

12. Verfahren nach mindestens einem der vorangehenden Ansprüche, **dadurch gekennzeichnet**, daß die Schwingungsamplitude der Festkörperpartikel beim Rüttelvorgang 2 mm bis 5 mm beträgt.

13. Verfahren nach mindestens einem der vorangehenden Ansprüche, **dadurch gekennzeichnet**, daß die Oberfläche der Festkörperpartikel im Mittel 0,1 cm² bis 10 cm² beträgt.

14. Verfahren nach mindestens einem der vorangehenden Ansprüche, **dadurch gekennzeichnet**, daß die Oberfläche der Festkörperpartikel im Mittel 1 cm² bis 2 cm² beträgt.

15. Verfahren nach mindestens einem der vorangehenden Ansprüche, **dadurch gekennzeichnet**, daß die Festkörperpartikel in eine Vorrichtung mit einem Schwingfließbett eingegeben werden.

16. Verfahren nach mindestens einem der vorangegangenen Ansprüche, **dadurch gekennzeichnet**, daß die Verweilzeit der Festkörperpartikel im Schwingfließbett 1 bis 50 Minuten.

17. Verfahren nach mindestens einem der vorangegangenen Ansprüche, **dadurch gekennzeichnet**, daß die Verweilzeit der Festkörperpartikel im Schwingfließbett 3 bis 15 Minuten beträgt.

18. Verfahren nach mindestens einem der vorangegangenen Ansprüche, **dadurch gekennzeichnet**, daß die spezifische Gasbeaufschlagung des Schwingfließbettes 1000 bis 3000 Kubikmeter pro Quadratmeter und Stunde beträgt.

19. Verfahren nach mindestens einem der vorangegangenen Ansprüche, **dadurch gekennzeichnet**, daß die spezifische Gasbeaufschlagung des Schwingfließbettes 1500 bis 2000 Kubikmeter pro Quadratmeter und Stunde beträgt.

20. Verfahren nach mindestens einem der vorangegangenen Ansprüche, **dadurch gekennzeichnet**, daß das das Schwingfließbett durchströmende Gas im Kreislauf mit partieller Erneuerung des Gasinventars umgewälzt wird.

21. Anordnung zum Herauslösen des in das Glas von Entladungslampen eingedrungenen Quecksilbers und dem Glas und/oder den Metallkappen äußerlich anhaftendem Quecksilber und/oder Leuchtstoffen mit einem Schwingfließbett mit mindestens einer Gaseintrittsöffnung und mindestens einer Abgasaustrittsöffnung,
**gekennzeichnet dadurch, daß**
im Kreislauf (11) vor dem Schwingfließbett (2) Gebläse (5) und Wärmetauscher (6) für die Führung und Erwärmung des Kreislaufgases angeordnet sind und nach dem Schwingfließbett (2) nacheinander ein Fliehkraftabscheider (7) zum Abscheiden der Hauptmenge an Staub und Leuchtstoffen, ein Feinstaubfilter (8) zum Abscheiden der Restmenge an Feststoffen, ein Wärmetauscher (9) für die Abführung der überschüssigen Wärme aus dem Kreislaufgas und ein Aktivkohlefilter (10), zum Abscheiden des Quecksilbers angeordnet sind und das Schwingfließbett (2) mindestens eine Eintritts- und Austrittsöffnung aufweist.

22. Anordnung nach Anspruch 21, **dadurch gekennzeichnet**, daß der Aktivkohlefilter (10) zwei verschiedene Schichten (101, 102) aufweist, wobei die eine Schicht (101) aus nicht imprägnierter Aktivkohle und die andere Schicht (102) aus imprägnierter Aktivkohle besteht.

## Claims

1. Method for dissolving out the mercury forced into the glass of discharge lamps and for removing mercury and/or luminescent substances adhering externally to the glass and/or metal caps
characterised in that the glass and/or metal caps of discharge lamps are first pulverised and the solid particles obtained are then shaken whereby the acceleration which acts on the solid particles during the shaking process amounts to at least 2 g and at the same time the solid particles are enveloped in a current of gas.

2. Method according to claim 1 characterised in that the pressurised force exerted by the gas on the solid particles is substantially the same amount as the gravity force acting on the solid particles.

3. Method according to at least one of claims 1 or 2 characterised in that the gas flowing round the solid particles has a temperature between 0°C and 100°C.

4. Method according to at least one of claims 1 to 3 characterised in that the gas flowing round the solid particles has a temperature of between 40°C to 60°C.

5. Method according to at least one of claims 1 to 4 characterised in that the released substance is recovered from the gas flowing past the solid particles.

6. Method according to at least one of claims 1 to 5 characterised in that air is used as the gas flowing round the solid particles.

7. Method according to at least one of the preceding claims, characterised in that the solid particles experience acceleration during the shaking process of 2 g to 10 g.

8. Method according to at last one of the preceding claims, characterised in that the solid particles experience acceleration during the shaking process of 3 g to 4 g.

9. Method according to at least one of the preceding claims, characterised in that the solid particles are shaken with a frequency of 750 to 3000 vibrations per minute.

10. Method according to at least one of the preceding claims, characterised in that the solid particles are shaken with a frequency of 1100 to 1750 vibrations per minute.

11. Method according to at least one of the preceding claims, characterised in that the vibration amplitude of the solid particles during the shaking process amounts on average to 1 to 10 mm.

12. Method according to at least one of the preceding claims, characterised in that the vibration amplitude of the solid particles during the shaking process amounts to 2 mm to 5 mm.

13. Method according to at least one of the preceding claims, characterised in that the surface of the solid particles amounts on average to 0.1 cm₂ to 10 cm^{2.}

14. Method according to at least one of the preceding claims, characterised in that the surface of the solid particles amounts on average to 1 cm² to 2 cm².

15. Method according to at least one of the preceding claims, characterised in that the solid particles are introduced into an apparatus with a vibrating fluidized bed.

16. Method according to at least one of the preceding claims, characterised in that the dwell time of the solid particles in the vibrating fluidized bed is 1 to 50 minutes.

17. Method according to at least one of the preceding claims, characterised in that the dwell time of the solid particles in the vibrating fluidized bed amounts to 3 to 15 minutes.

18. Method according to at least one of the preceding claims, characterised in that the specific gas biasing of the vibrating fluidized bed amounts to 1000 to 3000 cubic metres per square metre and hour.

19. Method according to at least one of the preceding claims, characterised in that the specific gas biasing of the vibrating fluidized bed amounts to 1500 to 2000 cubic metres per square metre and hour.

20. Method according to at least one of the preceding claims, characterised in that the gas flowing through the vibrating fluidized bed is circulated in a circuit with partial renewal of the gas inventory.

21. Arrangement for dissolving out the mercury forced into the glass of discharge lamps and of the mercury and/or luminous substances superficially adhering to the glass and/or metal caps with a vibrating fluidized bed with at least one gas inlet opening and at least one exhaust gas outlet opening,
characterised in that a fan (5) and heat exchanger (6) are arranged in the circuit (11) in front of the vibrating fluidized bed (2) for guiding and heating the circulating gas and after the vibrating fluidized bed (2) there is in succession a centrifugal force separator (7) for separating off the main quantity of dust and luminous substances, a fine dust filter (8) for separating off the remaining amount of solids, a heat exchanger (9) for drawing off the excess heat from the circulating gas and an activated charcoal filter (10) for separating off the mercury, and the vibrating fluidized bed (2) has at least one inlet and outlet opening.

22. Arrangement according to claim 21, characterised in that the activated charcoal filter (10) has two different layers (101, 102) wherein one layer (101) consists of a non-impregnated activated charcoal and the other layer (102) consists of impregnated activated charcoal.

## Revendications

1. Procédé pour extraire le mercure ayant pénétré dans le verre de lampes à décharge et pour détacher du mercure et/ou des substances luminescentes adhérant extérieurement au verre et/ou aux capuchons métalliques, caractérisé en ce que le verre et/ou les capuchons métalliques de lampes à décharge sont tout d'abord fragmentés et les particules de solide obtenues sont ensuite mises à vibrer, l'accélération agissant sur les particules de solide au cours du processus de vibration étant d'au moins 2 g et les particules de solide étant simultanément baignées dans un gaz.

2. Procédé suivant la revendication 1,caractérisé en ce que la force de pression exercée par le gaz sur les particules de solide présente sensiblement la même valeur que la force de gravité agissant sur les particules de solide.

3. Procédé suivant au moins l'une des revendications 1 et 2, caractérisé en ce que le gaz baignant les particules de solide présente une température comprise entre 0°C et 100°C.

4. Procédé suivant au moins l'une des revendications 1 à 3, caractérisé en ce que le gaz baignant les particules de solide présente une température comprise entre 40°C et 60°C.

5. Procédé suivant au moins l'une des revendications 1 à 4, caractérisé en ce que la matière extraite du gaz défilant sur les particules de solide est récupérée.

6. Procédé suivant au moins l'une des revendications 1 à 5, caractérisé en ce que, comme gaz baignant les particules de solide, on utilise de l'air.

7. Procédé suivant au moins l'une des revendications précédentes, caractérisé en ce que les particules de solide subissent, lors du processus de vibration, une accélération de 2 g à 10 g.

8. Procédé suivant au moins l'une des revendications précédentes, caractérisé en ce que les particules de solide subissent, lors du processus de vibration, une accélération de 3 g à 4 g.

9. Procédé suivant au moins l'une des revendications précédentes, caractérisé en ce que les particules de solide sont secouées à une fréquence de 750 à 3000 oscillations par minute.

10. Procédé suivant au moins l'une des revendications précédentes, caractérisé en ce que les particules de solide sont secouées à une fréquence de 1100 à 1750 oscillations par minute.

11. Procédé suivant au moins l'une des revendications précédentes, caractérisé en ce que l'amplitude d'oscillation des particules de solide au cours du processus de vibration est en moyenne de 1 à 10 mm.

12. Procédé suivant au moins l'une des revendications précédentes, caractérisé en ce que l'amplitude d'oscillation des particules de solide au cours du processus de vibration est de 2 mm à 5 mm.

13. Procédé suivant au moins l'une des revendications précédentes, caractérisé en ce que la surface des particules de solide est en moyenne de 0,1 cm² à 10 cm².

14. Procédé suivant au moins l'une des revendications précédentes, caractérisé en ce que la surface des particules de solide est en moyenne de 1 cm² à 2 cm².

15. Procédé suivant au moins l'une des revendications précédentes, caractérisé en ce que les particules de solide sont introduites dans un dispositif comportant un lit fluidisé oscillant.

16. Procédé suivant au moins l'une des revendications précédentes, caractérisé en ce que la durée de séjour des particules de solide dans le lit fluidisé oscillant est de 1 à 50 min.

17. Procédé suivant au moins l'une des revendications précédentes, caractérisé en ce que la durée de séjour des particules de solide dans le lit fluidisé oscillant est de 3 à 15 min.

18. Procédé suivant au moins l'une des revendications précédentes, caractérisé en ce que l'alimentation spécifique en gaz du lit fluidisé oscillant est de 1000 à 3000 m³ par m² et par heure.

19. Procédé suivant au moins l'une des revendications précédentes, caractérisé en ce que l'alimentation spécifique en gaz du lit fluidisé oscillant est de 1500 à 2000 m³ par m² et par heure.

20. Procédé suivant au moins l'une des revendications précédentes, caractérisé en ce que le gaz traversant le lit fluidisé oscillant est remis en circuit avec un renouvellement partiel du bilan gazeux.

21. Dispositif pour extraire le mercure ayant pénétré dans le verre de lampes à décharge et le mercure et/ou les substances luminescentes adhérant extérieurement au verre et/ou aux capuchons métalliques, comprenant un lit fluidisé oscillant ayant au moins une ouverture d'entrée de gaz et au moins une ouverture de sortie de gaz résiduaire, caractérisé en ce que
un ventilateur (5) et un échangeur de chaleur (6) pour le guidage et le chauffage du gaz en circuit sont agencés dans le circuit (11), en amont du lit fluidisé oscillant (2), en ce que, en aval du lit fluidisé oscillant (2), sont agencés successivement un cyclone (7) pour séparer la quantité principale de poussières et de substances luminescentes, un filtre à fines poussières (8) pour séparer la quantité restante des substances solides, un échangeur de chaleur (9) pour l'évacuation de la chaleur excessive à partir du gaz en circuit et un filtre à charbon actif (10) pour séparer le mercure, et en ce que le lit fluidisé oscillant (2) présente au moins une ouverture d'entrée et une ouverture de sortie.

22. Dispositif suivant la revendication 21, caractérisé en ce que le filtre à charbon actif (10) présente deux couches différentes (101, 102), l'une des couches (101) étant constituée de charbon actif non imprégné et l'autre couche (102) de charbon actif imprégné.
